# EUROPEAN PATENT SPECIFICATION

(11) **EP 3 517 002 B1**
(45) Date of publication and mention of the grant of the patent: **28.09.2022**
(21) Application number: 18153661.6
(22) Date of filing: 26.01.2018
(51) Int. Cl.: A47J 43/046, A47J 43/07, A47J 43/27

(54) **ELECTRIC BLENDER**
ELEKTRISCHER MISCHER
MIXEUR ÉLECTRIQUE

(43) Date of publication of application: 31.07.2019
(73) Proprietor: BSH Hausgeräte GmbH, 81739 München (DE)
(72) Inventor: Pececnik, Matic, 2000 Maribor (SI); Stergar, David, 3342 Gornji, Grad (SI)

(56) References cited:
- CN-A- 105 996 827
- FR-A1- 2 882 640
- US-A- 5 302 021
- US-A1- 2002 080 678

## Description

This invention relates to a kitchen machines for blending and processing food stuff and, more particularly to electric blenders comprise a base unit including, a drive motor, and blending system having rotating a number of blades in a jug for holding the material to be blended, and additionally provided with a tamper.

There is a potential danger if an user of said electric blender would tried to improve blending efficiency use inappropriate tool in an attempt to insert produce to be blended into it or to push such produce towards the rotating blades, what can lead to contact between the rotating blades and the tamper. Use of inappropriate tool can cause damage of blending system and can harm user. To prevent user from said danger the tamper is usually provided with a flange or other means which holds against an opening of a lid of the jug, to set up appropriate distance between end of working range of the tamper and the rotating blades.

The document US 7040799B2 discloses blender for blending foodstuff includes a base containing a motor. A blender jar is releasably attached to the base. The blender jar is open at a top end and closed at a bottom end. A blade set is drivingly connected to the motor and extends into the blender jar from the bottom end of the blender jar. A lid having an opening extending therethrough covers a substantial portion of the top end of the blender jar. A stirring stick extends through the opening in the lid and into the blender jar from the top end. The stirring stick includes an elongate plunger having first and second ends. The plunger has a cavity extending between the first and second ends such that at least a portion of the plunger is generally trough shaped. The cavity is open at least at the second end. A handle is attached to the first end of the plunger, such that a user may move the stirring stick in one or more directions when the stirring stick is positioned in the blender. The stirring stick which can be used to remove foodstuff from the blender jar and be manipulated with the lid in place on the blender jar to scoop, mix and scrape foodstuff within the blender jar.

The document US 2002/080678 A1 discloses a beverage mixer, smoothie maker or the like includes a container with a mixing assembly disposable on a base with a motor. A lid is disposable on the container and pivotally carries a stir stick that extends through an opening in the lid. The stir stick includes a ball portion to be pivotally disposable over the opening of the lid and to cooperate with the lid to cover the opening and to allow the ball portion to pivot in the opening. A spout can be coupled to the container to dispense contents, and can align with an alignment indentation in the base. A wall with an angled upper surface can be disposed adjacent the alignment indentation to abut and guide the spout to the alignment indentation. A cup indentation can be formed in the base under the alignment indentation to receive a cup under the spout.

The document US5302021A discloses method of preventing the formation of an air pocket in a blender. The air pocket is often formed in fluid in the pitcher of a blender around the rotating mixing blade assembly thereof. The air pocket is of a cross-sectional size defined by an air channel defining member, shown in the form of a bearing housing of the mixing blade assembly. After the pitcher is filled with the fluid, the plunger portion of an accessory is positioned adjacent to and above the mixing blade assembly and maintained free of contact with the pitcher. the plunger portion is of a cross-sectional size approximately the cross-sectional size of the air channel defining member and prevents the formation of the air pocket in the fluid around the blade assembly. The plunger portion having a stop member positioned near the top thereof. The plunger is received through an opening in the cover of a blender and into the blender pitcher therebelow. The stop member rests on the cover and the plunger is of a predetermined length so that the bottom thereof is just above a mixing blade assembly positioned near the bottom of the pitcher.

The document CN105996827 (A) discloses a wall-breaking food processer comprises a base main engine and a stirring cup detachably installed on the base main engine; the stirring cup comprises a cup body and a cup cover, a triggering mechanism triggered by the cup cover to connect a circuit of the wall-breaking food processer when the cup cover and the cup body are connected is arranged between the stirring cup and the base main engine, the triggering mechanism comprises a safety switch on the base main engine and a lifting rod arranged on the cup body and used for pushing the safety switch to be switched on or off, and the triggering mechanism further comprises a push rod boss arranged on the cup cover and used for pushing the lifting rod to move when the cup cover and the cup body are connected. A locking fastening position is arranged on the cup cover, a locking boss fastened with the locking fastening position in a rotating mode is arranged on the cup body, and while the locking fastening position fastens the locking boss in the rotating mode, the push rod boss pushes the lifting rod to press the safety switch so that the circuit of the wall-breaking food processer can be connected.

The document FR2882640A1 discloses a blender type kitchen appliance comprising a container the bottom of which comprises a working tool driven in rotation by a motor, said container being closed by a cover having an opening allowing the introduction of a mixing stick so that the lower end of the mixing stick can come close to the working tool, and that said mixing stick includes a concave lower end.

The objective of the present invention is to provide kitchen machine for blending and processing food stuff and, more particularly to electric blender comprises a base unit including, a drive motor, and blending system having rotating a number of blades in a jug for holding the material to be blended, and additionally provided with a tamper, wherein the efficiency of blending or cutting food stuff can be improved and the time needed for food preparing can be relatively shortened.

In accordance with the present invention, there is provided an electric blender according to claim 1.

Advantageously, the supporting stepped structure gives a broader scope of the pivotal movement, and permits a wide degree of guided, the pivotal movement of the tamper, thereby improving efficiency of blending or cutting food stuff can be improved and the time needed for food preparing can be thereby relatively shorter.

In an embodiment according to the present invention, a central rotational point of the pivotal movement of the tamper is located in a handle of the tamper. Therefore the tamper is easy to operate by the user of the blender during food stuff preparing. The handle is a portion of the tamper configured to be convenient to use by user. Therefore it should have appropriate shape and dimension, also to achieve requirements of the standard.

Said frusto-conical structure can be configured as concave or convex frusto-conical surface. Therefore the tamper can be supported in the maximum angle of the pivotal movement.

The flange of the tamper in cooperation with the supporting stepped structure establish appropriate distance between the end of the working portion of the tamper and rotating blades. Therefore the tamper when mounted on the lid is prevented from falling into the jug and from damaging by the rotating blades.

In another preferred embodiment the flange has a generally conical shaped a guiding surface which is configured as a stepped profile, coaxially configured to a tamper axis toward to the working portion of the tamper. The guiding surface can be also configures as concave or convex conical surface. The positive effect is in that the tamper is automatically positioned on the lid by gravity in a right position.

Advantageously the guiding surface comprises a guiding means, coaxially oriented to the tamper axis and dividing the guiding surface into a sliding surface and a supporting surface for better guidance the tamper on the lid.

In another preferred embodiment a guiding surface of the flange is in the contact with the supporting stepped structure when the tamper is in a working position. Because of established said contact the tamper can be run smoothly on the lid, what is beneficial for the user. The working position is when the lid is mounted on the jug and the tamper passes through the opening of the lid and the tamper is held by the lid.

In a further preferred embodiment working portion of the tamper is formed in a shape of a rod or cylinder having a thickening at its free end. The positive effect is in that the greater amount of inserted produce to be blended can be pushed towards a rotating blades by the thickened end of the tamper. Another positive effect is in that the processed food stuff is efficiently stopped and mixed by the tamper with thickened end of the working portion. While processing food stuff the latter spins together with the rotating blades. Therefore by partially stopping and mixing, efficiency of blending can be additionally improved.

The present invention provides a kitchen machines for blending and processing food stuff and, more particularly to electric blenders comprise a base unit including, a drive motor, and blending system having rotating a number of blades in a jug for in a jug for holding the material to be blended, and additionally provided with a tamper and a supporting stepped structure which gives a broader scope of the pivotal movement, and permits a wide degree of guided, the pivotal movement of the tamper, thereby improving efficiency of blending or cutting food stuff can be improved and the time needed for food preparing can be thereby relatively shorted.

The features of the invention believed to be novel are set forth with particularity in the appended claims. The invention itself, however, may be best understood by reference to the following detailed description of the invention, which describes an exemplary embodiment of the invention, taken in conjunction with the accompanying drawings. Further benefits and advantages of the present invention will become apparent after a careful reading of the detailed description with appropriate reference to the accompanying drawings.
Fig. 1 exemplary shows an electric blender,
Fig. 2 shows a cross section of a jug,
Fig. 3 shows a tamper,

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

Typically, a kitchen machines for blending and processing food stuff, also include what are known as fully electric blenders, comprise a base unit including comprising a base unit including a motor turning a drive mechanism extending therefrom, a jug disposable on the base unit, including rotating blades disposed therein and engagable by the drive mechanism when the jug is disposed on the base unit, a lid removably disposed on the jug, having an opening, a tamper configured to be held by the lid, and extendable through the opening in the lid and into the jug, and to be pivotable with respect to the lid when held thereby. The pivotal movement of the tamper is used for improving the result of blending or cutting food stuff.

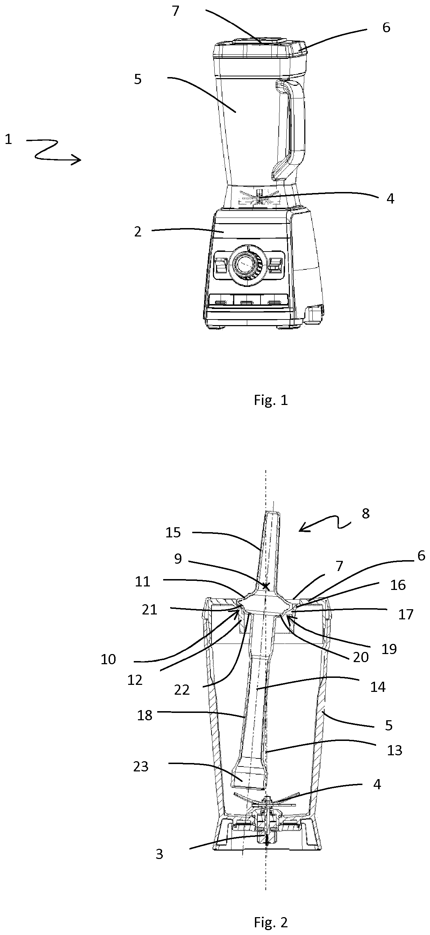

Fig. 1 exemplary shows an electric blender 1. The electric blender 1 comprising a base unit 2 including a motor (not shown on this figure) turning a drive mechanism 3 extending therefrom, a jug 5 disposable on the base unit 2, including a rotating blades 24 disposed therein and engagable by the drive mechanism 3. A lid 6 is removably disposed on the jug 5 and is provided with an opening 7. A tamper 8 (not shown on this figure) is held by the lid 6, and extends through the opening in the lid 6 and into the jug 5. The jug 5 is pivotable mounted with respect to the lid 6 by a supporting stepped structure 10 configured on the lid 5.

Fig. 2 shows a cross section of a jug 5. The jug 5 is provided with removably disposed the lid 6. The lid 6 has an opening 7 for receiving a tamper 8 configured to be held by the lid 6, and extendable through the opening in the lid 6 and into the jug 5, and to be pivotable with respect to the lid 6 is provided with a supporting stepped structure 10. The supporting stepped structure 10 is symmetrically disposed around the opening 7 to support a pivotal movement of the tamper 8 by a central rotational point 9 of the pivotal movement located on an opening axis 13 and simultaneously in a handle 15 of the tamper 8. The supporting stepped structure 10 comprises a convex frusto-conical structure 16 disposed coaxially with the opening axis 13 on the lid 6, and from one side creates the opening 7 and from second side turns into a cylindrical portion 17 protruding inside the jug 5. The cylindrical portion 17 is completed by a rim 12 with smaller inner diameter than an inner diameter of the cylindrical portion 17. The tamper 8 has a coaxial flange 11 disposed between the handle 15 and a working portion 18 wherein an outer diameter of the flange 11 is smaller than the internal diameter of the opening 7 and is greater than the internal diameter of the cylindrical portion 17. The flange 11 has a generally concave conical shaped a guiding surface 19 which is configured as a stepped profile, coaxially configured to a tamper axis 14 configured toward to the working portion 18 of the tamper 8. The guiding surface 19 comprises a guiding means 20 as a protruding round rib, coaxially oriented to the tamper axis 14 and dividing the guiding surface 19 into a concave sliding surface 21 and a concave supporting surface 22. The tamper 8 is in a working position wherein the guiding surface 19 of the flange 11 is in the contact with the supporting stepped structure 10 when the tamper 8. The working portion 18 of the tamper 8 is formed in a shape of a rod or cylinder having a thickening 23 at its free end.

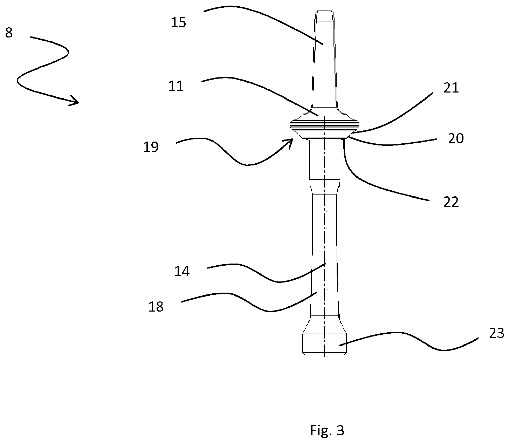

Fig. 3 shows a tamper 8. The tamper 8 has a coaxial flange 11 disposed between the handle 15 and a working portion 18. The flange 11 has a generally concave conical shaped a guiding surface 19 which is configured as a stepped profile, coaxially configured to a tamper axis 14 configured toward to the working portion 18 of the tamper 8. The guiding surface 19 comprises a guiding means 20 as a protruding round rib, coaxially oriented to the tamper axis 14 and dividing the guiding surface 19 into a concave sliding surface 21 and a concave supporting surface 22.

The present invention provides a kitchen machines for blending and processing food stuff and, more particularly to electric blenders comprise a base unit including, a drive motor, and blending system having rotating a number of blades in a jug for in a jug for holding the material to be blended, and additionally provided with a tamper and a supporting stepped structure which gives a broader scope of the pivotal movement, and permits a wide degree of guided, the pivotal movement of the tamper, thereby improving efficiency of blending or cutting food stuff can be improved and the time needed for food preparing can be thereby relatively shorted.

## Claims

1. Electric blender (1) comprising a base unit (2) including a motor turning a drive mechanism (3) extending therefrom, a jug (5) disposable on the base unit (2), including rotating blades (4) disposed therein and engageable by the drive mechanism (3) when the jug (5) is disposed on the base unit (2), a lid (6) removably disposed on the jug (5), having an opening (7), a tamper (8) configured to be held by the lid (6), and extendable through the opening in the lid (6) and into the jug (5), and to be pivotable with respect to the lid (6) when held thereby, wherein the lid (6) is provided with a supporting stepped structure (10) symmetrically disposed around the opening (7) to support a pivotal movement of the tamper (8) by a central rotational point (9) of the pivotal movement, located on an opening axis (13), wherein the supporting stepped structure (10) comprises a frusto-conical structure (16) disposed coaxially with the opening axis (13) on the lid (6), and from one side creates the opening (7) and from second side turns into a cylindrical portion (17) protruding inside the jug (5) and completed by a rim (12) with smaller inner diameter than an inner diameter of the cylindrical portion (17) and wherein the tamper (8) has a coaxial flange (11) disposed between a handle (15) and a working portion (18) wherein an outer diameter of the flange (11) is smaller than the internal diameter of the opening (7) and is greater than the internal diameter of the cylindrical portion (17).

2. Electric blender (1) according to claim 1, **characterized in that** the central rotational point (9) of the pivotal movement of the tamper (8) is located in a handle (15) of the tamper (8).

3. Electric blender (1) according to claim 1 or 2 **characterized in that** the flange (11) has a generally conical shaped a guiding surface (19) which is configured as a stepped profile, coaxially configured to a tamper axis (14) toward to the working portion (18) of the tamper (8).

4. Electric blender (1) according to claim 3 **characterized in that** the guiding surface (19) comprises a guiding means (20), coaxially oriented to the tamper axis (14) and dividing the guiding surface (19) into a sliding surface (21) and a supporting surface (22).

5. Electric blender (1) according to claim 3 or 4 **characterized in that** the guiding surface (19) of the flange (11) is in the contact with the supporting stepped structure (10) when the tamper (8) is in a working position.

6. Electric blender (1) according to any of preceding claim **characterized in that** the working portion (18) of the tamper (8) is formed in a shape of a rod or cylinder having a thickening (23) at its free end.

## Patentansprüche

1. Elektrischer Mixer (1), der Folgendes umfasst: eine Sockeleinheit (2) mit einem Motor, der einen davon ausgehenden Antriebsmechanismus (3) dreht, einen auf der Sockeleinheit (2) absetzbaren Becher (5), in dem rotierende Messer (4) angeordnet sind und den der Antriebsmechanismus (3) in Eingriff nehmen kann, wenn der Becher (5) auf der Sockeleinheit (2) angeordnet ist, einen abnehmbar auf dem Becher (5) angeordneten Deckel (6) mit einer Öffnung (7), einen Stampfer (8), der so konfiguriert ist, dass er von dem Deckel (6) gehalten wird und durch die Öffnung in dem Deckel (6) hindurch in den Becher (5) hinein verlaufen kann und in Bezug auf den Deckel (6) schwenkbar ist, wenn er davon gehalten wird, wobei der Deckel (6) mit einer abgestuften Haltekonstruktion (10) versehen ist, die symmetrisch um die Öffnung (7) herum angeordnet ist und so eine Schwenkbewegung des Stampfers (8) um einen auf einer Öffnungsachse (13) liegenden Rotationsmittelpunkt (9) der Schwenkbewegung herum ermöglicht, wobei die abgestufte Haltekonstruktion (10) eine koaxial zur Öffnungsachse (13) am Deckel (6) angeordnete kegelstumpfförmige Konstruktion (16) umfasst und auf einer Seite die Öffnung (7) schafft und auf der anderen Seite in einen zylinderförmigen Abschnitt (17) übergeht, der in den Becher (5) hineinragt und durch einen Rand (12) mit einem geringeren Innendurchmesser als ein Innendurchmesser des zylinderförmigen Abschnitts (17) abgeschlossen ist, und wobei der Stampfer (8) einen koaxialen Flansch (11) aufweist, der zwischen einem Griff (15) und einem Arbeitsabschnitt (18) angeordnet ist, wobei ein Außendurchmesser des Flansches (11) geringer ist als der Innendurchmesser der Öffnung (7) und größer ist als der Innendurchmesser des zylinderförmigen Abschnitts (17).

2. Elektrischer Mixer (1) nach Anspruch 1, **dadurch gekennzeichnet, dass** sich der Rotationsmittelpunkt (9) der Schwenkbewegung des Stampfers (8) in einem Griff (15) des Stampfers (8) befindet.

3. Elektrischer Mixer (1) nach Anspruch 1 oder 2, **dadurch gekennzeichnet, dass** der Flansch (11) eine allgemein konisch geformte Führungsfläche (19) aufweist, die als abgestuftes Profil und koaxial mit einer Stampferachse (14) in Richtung des Arbeitsabschnitts (18) des Stampfers (8) konfiguriert ist.

4. Elektrischer Mixer (1) nach Anspruch 3, **dadurch gekennzeichnet, dass** die Führungsfläche (19) ein Führungsmittel (20) umfasst, das koaxial zur Stampferachse (14) ausgerichtet ist und die Führungsfläche (19) in eine Gleitfläche (21) und eine Haltefläche (22) unterteilt.

5. Elektrischer Mixer (1) nach Anspruch 3 oder 4, **dadurch gekennzeichnet, dass** die Führungsfläche (19) des Flansches (11) die abgestufte Haltekonstruktion (10) berührt, wenn sich der Stampfer (8) in einer Arbeitsposition befindet.

6. Elektrischer Mixer (1) nach einem der vorhergehenden Ansprüche, **dadurch gekennzeichnet, dass** der Arbeitsabschnitt (18) des Stampfers (8) in Form eines Stabs oder Zylinders mit einer Verdickung (23) an seinem freien Ende ausgebildet ist.

## Revendications

1. Mélangeur électrique (1) comprenant une unité de base (2) qui inclut un moteur faisant tourner un mécanisme d'entraînement (3) s'étendant de lui, un bol (5) que l'on peut disposer sur l'unité de base (2), incluant des lames rotatives (4) disposées à l'intérieur et dans lesquelles le mécanisme d'entraînement (3) peut s'engager quand le bol (5) est disposé sur l'unité de base (2), un couvercle (6) disposé de façon amovible sur le bol (5), comprenant une ouverture (7), un poussoir (8) conçu pour être tenu par le couvercle (6) et extensible à travers l'ouverture dans le couvercle (6) et dans le bol (5) et pour être pivotable par rapport au couvercle (6) quand on le tient dessus, le couvercle (6) étant doté d'une structure support échelonnée (10) disposée symétriquement autour de l'ouverture (7) pour supporter un mouvement de pivotement du poussoir (8) au niveau d'un point de rotation central (9) du mouvement de pivotement situé sur un axe d'ouverture (13), où la structure support étagée (10) comprend une structure tronconique (16) disposée de façon coaxiale par rapport à l'axe d'ouverture (13) sur le couvercle (6), crée l'ouverture (7) d'un côté et se transforme de l'autre côté en une partie cylindrique (17) qui dépasse à l'intérieur du bol (5) et est complétée par une jante (12) d'un diamètre interne inférieur au diamètre interne de la partie cylindrique (17), et où le poussoir (8) comporte un rebord coaxial (11) disposé entre une poignée (15) et une partie de travail (18), le diamètre externe du rebord (11) étant inférieur au diamètre interne de l'ouverture (7) et supérieur au diamètre interne de la partie cylindrique (17).

2. Mélangeur électrique (1) selon la revendication 1, **caractérisé en ce que** le point de rotation central (9) du mouvement de pivotement du poussoir (8) est situé dans une poignée (15) du poussoir (8).

3. Mélangeur électrique (1) selon la revendication 1 ou 2, **caractérisé en ce que** le rebord (11) a une surface de guidage de forme généralement conique (19) qui est conçue comme un profil échelonné, configurée selon un axe de poussoir (14) vers la partie de travail (18) du poussoir (8).

4. Mélangeur électrique (1) selon la revendication 3, **caractérisé en ce que** la surface de guidage (19) comprend un moyen de guidage (20) orienté coaxialement sur l'axe de poussoir (14) et divisant la surface de guidage (19) en une surface de glissement (21) et une surface support (22).

5. Mélangeur électrique (1) selon la revendication 3 ou 4, **caractérisé en ce que** la surface de guidage (19) du rebord (11) est en contact avec la structure support échelonnée (10) quand le poussoir (8) est dans une position de travail.

6. Mélangeur électrique (1) selon l'une quelconque des revendications précédentes, **caractérisé en ce que** la partie de travail (18) du poussoir (8) a la forme d'une tige ou d'un cylindre ayant un épaississement (23) à son extrémité libre.
